Europäisches Patentamt

European Patent Office

Office européen des brevets

(19)

(11) Numéro de publication: **0 273 805 B1**

(12) **FASCICULE DE BREVET EUROPEEN**

(51) Int. Cl.⁵: **B60Q 1/42, B60Q 1/14**

(45) Date de publication de fascicule du brevet:
**17.07.91**

(21) Numéro de dépôt: **87402714.7**

(22) Date de dépôt: **01.12.87**

(54) Perfectionnements aux articulations de levier de commande pour commutateur électrique.

(30) Priorité: **03.12.86 FR 8616930**

(43) Date de publication de la demande:
**06.07.88 Bulletin 88/27**

(45) Mention de la délivrance du brevet:
**17.07.91 Bulletin 91/29**

(84) Etats contractants désignés:
**DE ES GB IT SE**

(56) Documents cités:
**FR-A- 1 432 008**
**FR-E- 83 272**

(73) Titulaire: **JAEGER**
**2, rue Baudin**
**F-92303 Levallois-Perret(FR)**

(72) Inventeur: **Chretien, Louis Jacques**
**65 rue du Grillon**
**F-95610 Eragny S/Oise(FR)**

(74) Mandataire: **Martin, Jean-Jacques et al**
**Cabinet REGIMBEAU 26, Avenue Kléber**
**F-75116 Paris(FR)**

EP 0 273 805 B1

Rank Xerox (UK) Business Services

## Description

La présente invention concerne le domaine des commutateurs électriques, en particulier pour véhicules automobiles.

La présente invention concerne plus précisément les commutateurs électriques du type comportant un boîtier muni d'une pluralité de contacts électriques et portant un levier de commande, dans lequel le levier de commande peut être déplacé à rotation autour de son axe longitudinal pour opérer une première action sur les contacts électriques en vue d'assurer une première fonction, le levier de commande peut être déplacé à pivotement autour d'un axe principal transversal à son axe longitudinal pour opérer une seconde action sur les contacts électriques en vue d'assurer une seconde fonction et le levier de commande peut être déplacé à pivotement autour d'un axe secondaire transversal à son axe longitudinal et à l'axe principal pour opérer une troisième action sur les contacts électriques en vue d'assurer une troisième fonction.

On a déjà proposé de nombreux commutateurs de ce type.

De tels commutateurs sont par exemple décrits et représentés dans les brevets US-A-4 293 743, US-A-4 379 954 et US-A-4 393 280.

Les commutateurs décrits dans les documents précités comprennent un boîtier, un équipage, un étrier et le levier de commande. L'équpage est porté à pivoteément sur le boîtier autour de l'axe secondaire pour opérer la troisième fonction précitée. L'étrier est porté à pivotement sur l'équipage autour de l'axe principal pour opérer la seconde fonction précitée. Enfin, le levier de commande est engagé dans un canal traversant l'étrier et libre de rotation dans ce canal, autour de son axe longitudinal, pour opérer la première fonction précitée.

Les commutateurs du type précité jusqu'ici proposés ont déjà rendu de grands services.

Néanmoins, la demanderesse a constaté que ces commutateurs présentent un jeu de fonctionnement non négligeable.

La présente invention, a pour but de perfectionner les commutateurs du type indiqué dans le préambule, notamment en limitant le jeu de ceux-ci.

Ce but est atteint selon la présente invention grâce à un commutateur électrique du type indiqué dans le préambule, caractérisé par le fait qu'il comprend une rotule portée à pivotement sur le boîtier autour de deux axes transversaux respectivement principal et secondaire, la rotule possédant un canal traversant recevant le levier libre de rotation autour de son axe longitudinal transversal aux axes de pivotement principal et secondaire de la rotule, le commutateur comportant en outre une chape portée par la rotule pour suivre celle-ci lors de son pivotement autour de l'axe secondaire tout en autorisant un pivotement relatif de la rotule par rapport à la chape lorsque la rotule est déplacée à pivotement autour de l'axe principal.

Selon une caractéristique additionnelle avantageuse de l'invention, le boîtier est muni d'un palier d'enveloppe sphérique guidant la rotule à pivotement autour de l'axe secondaire et de l'axe principal tandis qu'un organe élastique sollicite la rotule en appui contre le palier.

De façon avantageuse , l'organe élastique sollicitant la rotule en appui contre le palier sphérique sollicite également un organe servant d'indexation à la chape et à la rotule lors de leur pivotement autour de l'axe secondaire.

De façon préférentielle, la rotule porte au moins un tourillon coaxial à l'axe principal et la chape est engagée sur le tourillon pour suivre la rotule lors de ses pivotement autour de l'axe secondaire, tout en autorisant un pivotement relatif de la rotule par rapport à la chape lorsque la rotule est entraînée en déplacement autour de l'axe principal.

Plus précisément encore, de préférence, la rotule porte deux tourillons diamètralement opposés et coaxiaux à l'axe principal sur lesquels est engagée la chape.

Selon une autre caractéristique avantageuse de la présente invention, le commutateur comprend des moyens élastiques interposés entre la chape et la rotule pour définir une indexation relative de la chape et de la rotule lorsque cette dernière est entraînée à pivotement autour de l'axe principal.

De façon avantageuse le levier est de plus susceptible de translation parallèlement à son axe longitudinal pour opérer une quatrième fonction.

De façon préférentielle mais non limitative la rotation du levier autour de son axe longitudinal assure une sélection du mode éclairage arrêt/ville/route d'un commutateur d'éclairage d'un véhicule automobile, le pivotement de la rotule autour de l'axe principal assure une inversion des fonctions code/phare, tandis que le pivotement de la rotule autour de l'axe secondaire assure une commande des indicateurs de changement de direction.

D'autres caractéristiques, buts et avantages de la présente invention apparaîtront à la lecture de la description détaillée qui va suivre et en regard des dessins annexés donnés à titre d'exemple non limitatif et sur lesquels :

- la figure 1 représente une vue schématique en coupe longitudinale d'un commutateur conforme à la présente invention selon un plan de coupe illustré schématiquement sous la référence I-I sur la figure 2,
- la Figure 1A représente une vue de détail des moyens pour guider la rotule
- la figure 2 représente une vue de dessous des éléments essentiels du commutateur conformes à la présente invention selon des plans non coplanaires illustrés sous la référence II-II sur la figure 1,

- la figure 3 représente une vue de dessous de la rotule d'un commutateur électrique conforme à la présente invention, selon une vue similaire à la figure 2,
- la figure 4 représente une vue latérale, partiellement en coupe, de la même rotule, selon une vue similaire au plan de coupe de la figure 1,

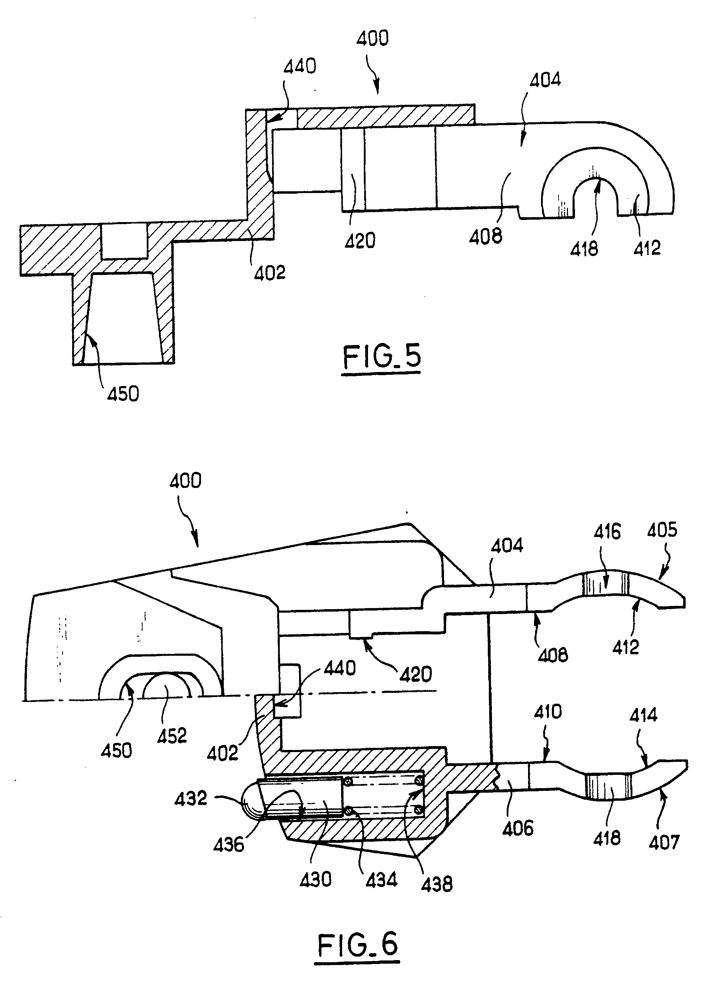

- la figure 5 représente une vue de la chape d'un commutateur électrique conforme à la présente invention selon un plan de coupe similaire à celui-ci de la figure 1, et
- la figure 6 représente la chape d'un commutateur électrique conforme à la présente invention ; plus précisément, la demi-vue supérieure de la figure 6 représente une vue de dessous de la chape, similaire à la figure 2, tandis que la demi-vue inférieure de la figure 6 représente la chape selon des plans de coupe non coplanaires illustrés sous la référence VI-VI sur la figure 1.

On aperçoit sur les figures annexées un commutateur électrique comprenant un boîtier 100, une rotule 200, un levier de commande 300 et une chape 400.

Selon le mode de réalisation illustré sur les figures le boîtier 100 est formé par un corps médian 102 et deux chapeaux 106, 108.

La rotule 200 comprend un corps central 202 de surface extérieure 204 sphérique, La rotule 200 comprend également un doigt de commande 206 et un manchon 208 solidairesdu corps central 202 et sensiblement diamétralement opposés.

Le corps central sphérique 202 de la rotule repose contre un palier 110 d'enveloppe sphérique ménagé sur le chapeau 106 du boîtier.

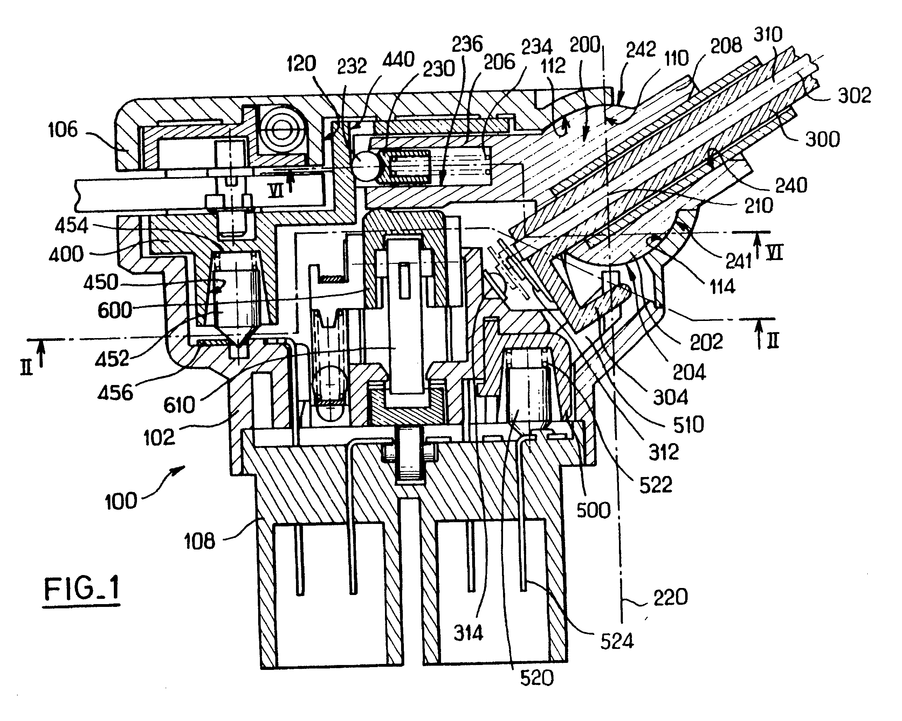

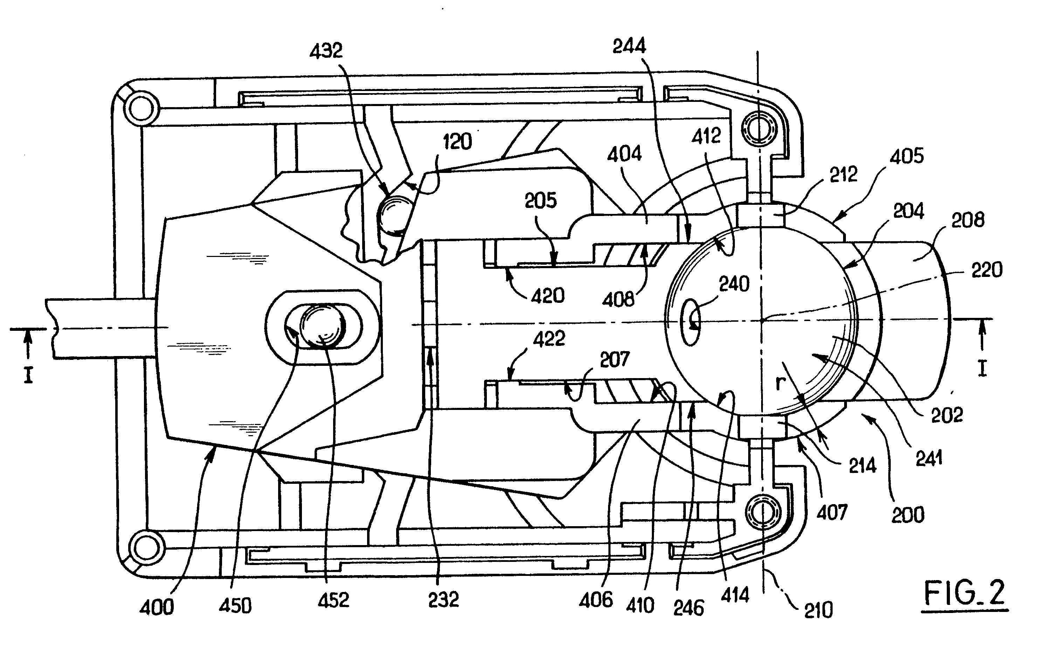

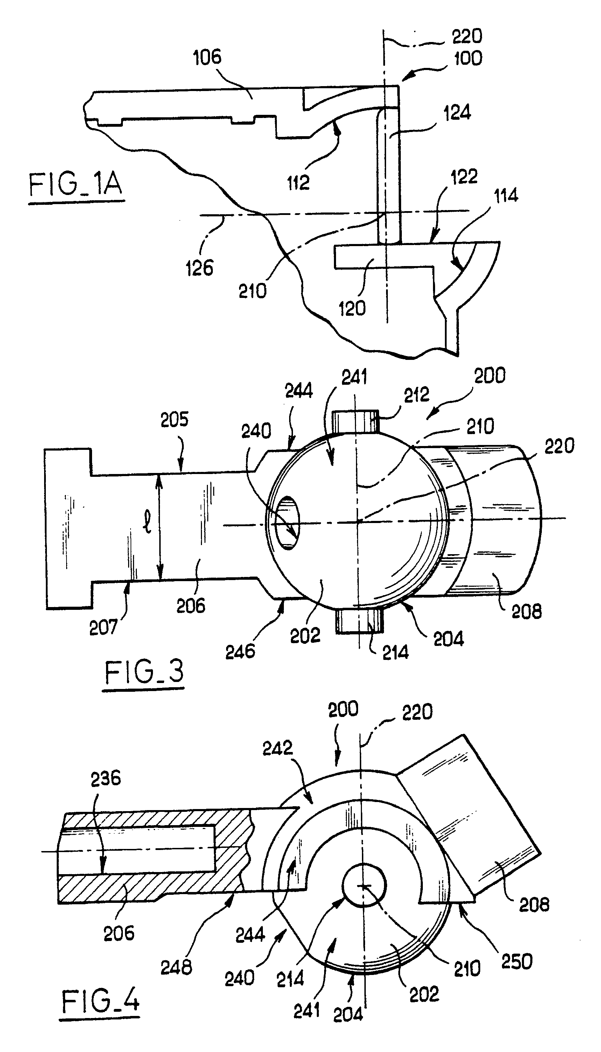

Plus précisément, les surfaces sphériques du palier 110 sont référencées 112, 114 sur la figure 1.

On notera à l'examen de cette figure que le palier 110 n'enveloppe le corps central 202 de la rotule que sur une partie de sa périphérie, plus précisément au niveau de zones diamétralement opposées par rapport au centre du corps central 202.

Le palier 110 guide la rotule 200 à pivotement autour de deux axes 120, 220 dénommés respectivement principal et secondaire.

L'axe 210 s'étend parallèlement au plan de la figure 2 et perpendiculairement au plan de coupe de la figure 1. L'axe secondaire 220 s'étend parallèlement au plan de coupe de la figure 1 et perpendiculairement au plan de la figure 2.

La chape 400 comprend une embase 402 et deux ailes 404, 406.

Les ailes 404, 406 sont généralement parallèles entre elles et parallèles au plan de coupe de la figure 1. Elles s'étendent d'un même côté de l'embase 402.

Les ailes 404, 406 sont munies au niveau de leur extrémité libre opposée à l'embase 402, sur leurs surfaces internes en regard 408, 410, de premières portées d'appui 412, 414.

Les première portées d'appui 412, 414 qui se font face sont définies par des surface sphèriques concaves complémentaires de la surface extérieure 204 du corps central 202 de la rotule.

De plus, les ailes 404, 406 sont munies de secondes portées d'appui 416, 418. Les secondes portées d'appui 416, 418 débouchent sur une face latérale commune des ailettes 404, 406. Pour l'essentiel, les secondes portées d'appui 416, 418 sont définies par une calotte cylindrique concave complémentaire de l'enveloppe cylindrique de tourillons 212, 214 prévue sur le corps central 202 de la rotule 200.

Les tourillons 212, 214 sont diamètralement opposés, coaxiaux entre eux et coaxiaux à l'axe principal 210.

Enfin, la chape 400 est munie de troisièmes portées d'appui 420, 422. Les troisièmes portées d'appui 420, 422 sont définies sur les surfaces internes en regard 408, 410 précitées des ailes 404, 406. Les troisièmes portées d'appui 420, 422, sont parallèles entre elles et parallèles au plan de coupe I-I illustré sur la figure 2.

La distance séparant les troisièmes portées d'appui 420, 422 correspond à la largeur référencée 1 sur la figure 3, du doigt de commande 206 solidaire de la rotule 200.

On notera que les troisièmes portées d'appui 420, 422 s'étendent perpendiculairement à l'axe principal 210.

Lorsque la chape 400 est engagée sur la rotule 200, les premières portées d'appui 412, 414 reposent contre la surface extérieure sphérique 204 de la rotule 200, les secondes portées d'appui 416, 418 reposent sur les tourillons 212, 214 de la rotule, et les troisièmes portées d'appui 420, 422 reposent contre les surfaces latérales 205, 207 du doigt de commande 206. Ainsi, la chape 400 suit constamment la rotule 200 lors de son pivotement autour de l'axe secondaire 220, tout en autorisant un pivotement relatif de la rotule 200 par rapport à la chape 400 lorsque la rotule 200 est déplacée à pivotement autour de l'axe principal 210.

En effet, lors du pivotement de la rotule autour de l'axe principal 210, les troisièmes portées d'appui 420, 422 peuvent glisser sur les surfaces latérales 205, 207 du doigt de commande 206. De même les tourillons 212, 214 peuvent pivoter dans les secondes portées d'appui 416 et 418, tandis que la surface externe sphérique 204 de la rotule peut pivoter dans les premières portées d'appui 412, 414.

Par contre, lorsque la rotule 200 est entraînée à rotation autour de l'axe secondaire 220, les surfaces latérales 205, 207 reposent contre les portées d'appui 420, 422 et assurent une liaison entre la rotule 200 et la chape 400.

La chape 400 est munie de moyens servant d'indexation par rapport au boîtier 100 lors du pivotement autour de l'axe secondaire 220.

Ces moyens d'indexation comprennent pour l'essentiel au moins un plot d'indexation 430 équipé le cas échéant d'un galet 432, sollicité élastiquement par un ressort 434 contre une surface d'indexation formant came référencée 120 sur la figure 2, solidaire du boîtier 100.

Le plot d'indexation 430 est logé dans un alésage borgne 436 ménagé dans la chape 400. Le ressort de sollicitation 434 est inséré entre le fond 438 de l'alésage borgne 436 et le plot 430.

De préférence, les moyens assurant l'indexation de la chape 400 par rapport au boîtier 100 au cours de son pivotement autour de l'axe secondaire 220 sont symétriques par rapport au plan de coupe de la figure 1 référencée I-I sur la figure 2.

De ce fait, de préférence, il est prévu deux alésages borgnes 436 symétriques du plan de coupe I-I et logeant chacun un plot d'indexation 430 pourvu d'un galet 432 sollicité contre la surface d'indexation 120 par une ressort 434.

La surface d'indexation 120 ménagée sur le boîtier 100 est dirigée vers le corps 202 de la rotule 200. Par contre, les alésages borgnes 436 ménagés dans la chape 400 et logeant les ressorts de sollicitation 434 ainsi que les plots d'indexation 430, débouchent à l'opposé du corps 202 de la rotule 200.

Ainsi, l'homme de l'art comprendra aisément à l'examen des figures annexées, que les ressorts d'indexation 434 qui poussent la chape 400 en éloignement de la surface d'indexation 120, par l'intermédiaire de l'engagement des secondes portées d'appui 416, 418 sur les tourillons 212, 214 solidaires de la rotule 200, sollicitent cette dernière contre les surfaces du palier sphérique 110 faisant face à la surface d'indexation 120.

Ainsi, grâce à la sollicitation élastique opérée sur le corps 202 de là rotule 200 par les ressorts d'indexation 434, on·obtient une rotation de la rotule 200 autour de l'axe principal 210 et de l'axe secondaire 220, parfaitement exempte de jeu. Il s'agit la d'une caractéristique importante de l'invention.

Par ailleurs, le fait d'utiliser, comme organe de sollicitation de la rotule 200 des ressorts 434 utilisés par ailleurs pour assurer l'indexation de la chape 400 lors de son pivotement autour de l'axe secondaire 220 permet d'obtenir une structure simple, compacte et économique.

Bien entendu d'autres moyens de sollicitation élastique de la rotule 200 contre le palier sphérique 110 pourraient être retenus.

De façon classique en soi les galets d'indexation 432 précités pivotent sur les plots d'indexation 430 autour d'axes parallèles à l'axe secondaire 220.

Il est également prévu des moyens assurant une indexation de la rotule 200 par rapport à la chape 400 lors du pivotement de la rotule 200 autour de l'axe principal 210.

Ces moyens d'indexation comprennent un plot d'indexation 230 portant un galet 232 et sollicité , contre une surface d'indexation 440 ménagée sur la chape 400,par un ressort de sollicitation 234.

Le plot 230 et le ressort 234 sont logés dans un alésage borgne 236 ménagés dans le doigt de commande 206. L'alésage 236 débouche à l'opposé du corps 202 de la rotule 200 en regard de la surface d'indexation associée 440.

Le corps 202 de la rotule et le manchon 208 sont traversés par un alésage 240 coaxial au manchon 208. L'alésage 240 reçoit le levier de commande 300 libre de rotation autour de son axe longitudinal 302.

Pour résumer, la rotule 200 est portée à pivotement sur le boîtier 100 autour des deux axes transversaux 210, 220 respectivement principal et secondaire.

La rotule 200 reçoit le levier 300 libre de rotation autour de son axe longitudinal 302 qui est généralement transversal aux axes de pivotement principal et secondaire 210, 220 de la rotule.

Enfin, la chape 400 est portée par la rotule 200 pour suivre celle-ci lors de son pivotement autour de l'axe secondaire 220 tout en autorisant un pivotement relatif de la rotule 200 par rapport à la chape 400 lorsque la rotule 200 est déplacée à pivotement autour de l'axe principal 210.

Le levier de commande 300 est muni d'un téton excentré 304. Celui-ci est engagé dans une fourche 510 solidaire d'un tiroir 500.

Le tiroir est guidé à translation sur le boîtier 100 parallèlement à l'axe principal 210.

Le tiroir 500 porte au moins un plot de contact 520 sollicité élastiquement par un ressort 522 contre un jeu de lamelles électriquement conductrices référencées généralement 524.

La rotation du levier de commande 300 autour de son axe longitudinal 302 induit, grâce au téton excentré 304 et par l'intermédiaire de la fourche 510, le déplacement à translation du tiroir 500 parallèlement à l'axe principal 210 pour déplacer le plot de contact 520 sur les lamelles 524 afin de modifier l'état de liaison de celles-ci.

Les lamelles 524 supportées par le boîtier 100 peuvent être adaptées de telle sorte que le tiroir 500 et le plot de contact 520, au cours de leur translation parallèlement à l'axe principal 210, assurent une sélection du mode d'éclairage, successivement : arrêt ville, route en reliant des paires variables de lamelles électriquement conductrices 524.

Le doigt de commande 206 repose conte un coulisseau 600. Le coulisseau 600 est guidé à translation sur le boîtier 100 parallèlement à l'axe secondaire 220. Le coulisseau 600 est sollicité en appui contre le doigt de commande 206 par des ressorts non représentés sur les figures pour simplifier l'illustration.

Le déplacement du levier de commande 300 autour de l'axe principal 210 induit un pivotement simultané de la rotule 200 autour du même axe principal 210 grâce à l'engagement du levier de commande 300 dans le canal traversant 240. Le pivotement de la rotule 200 autour de l'axe principal 210 induit, par l'intermédiaire du doigt de commande 206, un déplacement à translation du coulisseau 600 parallèlement à l'axe secondaire 220. Ce déplacement à translation du coulisseau 600 peut être utilisé pour commander une bascule assurant une commutation code/phare de l'éclairage du véhicule automobile. Ce même déplacement à translation du coulisseau 600 peut être utilisé pour réaliser un appel phare.

De nombreuses dispositions de bascule assurant une commutation code/phare ou de moyens de commande d'appel phare peuvent être retenues et ont déjà été proposées.

Pour ces raisons, ces moyens ne seront pas décrits plus en détail par la suite.

Néanmoins, on notera à l'examen des figures annexées que, selon un mode de réalisation préférentiel, le coulisseau 600 porte une palette 610 pour assurer une sélection code/phare à l'aide de moyens conformes à ceux décrits dans la demande de brevet déposée en France au nom de la demanderesse le 18 avril 1986 sous le N. 86 05604 et publiée sous le n°2597659.

La chape 400 possède un alésage borgne 450 d'axe parallèle à l'axe secondaire 220. Cet alésage 450 loge un plot de contact 452 et un ressort de sollicitation 454. Le plot 452 qui émerge à l'extérieur de l'alésage 450 est sollicité contre un jeu de lamelles 456 par le ressort 454.

Le pivotement du levier de commande 300 autour de l'axe secondaire 220 induit un pivotement simultané de la rotule 200 et de la chape 400 autour de l'axe secondaire 220. Ce pivotement autour de l'axe secondaire 220 induit un déplacement du plot de contact 452 sur le jeu de lamelles 456. Ainsi, du cours du pivotement de la chape 400 autour de l'axe secondaire 220, le plot de contact 452 relie des paires variables de lamelles 456.

Cette disposition peut être utilisés pour commander de façon classique en soi les indicateurs de changement de direction d'un véhicule automobile.

Le levier de commande 300 peut également comprendre une tige 310 susceptible de translation parallèlement à son axe longitudinal 302 pour opérer une quatrième fonction, de préférence une commande des avertisseurs sonores, par action sur un jeu de lamelles 312, 314.

On va maintenant décrire plus en détail la structure de la rotule 200 et des moyens guidant celle-ci autour des axes 210 et 220.

Cette description sera faite notamment en regard de la figure 1A annexée qui représente une vue de détail, similaire à la figure 1, des moyens prévus sur le boîtier 100 pour guider la rotule 200.

La rotule 200 peut comprendre plusieurs surfaces extérieures sphériques, de rayons différents, mais de même centre, coopérant avec des surfaces sphériques concaves complémentaires composant le palier 110.

Selon l'illustration donnée sur les figures annexées, la rotule 200 comprend deux surfaces sphériques 241, 242 reposant respectivement contre les surfaces 114 et 112 qui composent le palier 110.

La surface sphérique 242 possède un rayon supérieur à celui de la surface 241.

Les surfaces sphériques 241 et 242 se raccordent par l'intermédiaire de surfaces planes 244, 246, en forme de couronnes centrées sur l'axe principal 210 et transversales à celui-ci.

La surface 114 d'enveloppe sphérique, prévue sur le chapeau 106, est pour l'essentiel dirigée vers la paroi supérieure de celui-ci. Elle est complémentaire de la surface sphérique 241 de la rotule 200.

La surface 112 d'enveloppe sphérique, prévue également sur le chapeau 106, est pour l'essentiel dirigée vers le chapeau inférieur 108. Elle est sensiblement complémentaire de la surface 242 de la rotule 200.

Comme cela est représenté sur la figure 1A, le boîtier 100 comprend de plus une toile 120. Celle-ci s'étend perpendiculairement à l'axe secondaire 220. La surface supérieure 122 de la toile 120, qui est transversale à l'axe 220, sert d'appui aux tourillons 212, 214, et plus précisément à la génératrice inférieure des tourillons, c'est-à-dire à la génératrice des tourillons la plus proche du chapeau inférieur 108.

Pour cela, la distance, considiérée parallèlement à l'axe secondaire 220, séparant l'intersection de l'axe 220 et du plan de la surface 122 d'une part, et le centre commun des surfaces sphériques 114, 112 d'autre part, égale le rayon des tourillons 212, 214, diamétralement opposés, prévus sur la rotule 200.

Grâce à cette disposition, la rotule étant repoussée contre les surfaces 114, 112 du boîtier par les ressorts 434 et les tourillons 212, 214 reposant contre la surface 122 de la toile 120, l'axe 210 des tourillons (axe principal de la rotule) ne peut que se déplacer angulairement, autour de l'axe 220, dans un plan parallèle à la surface 122 et l'axe secondaire 220 est donc fixe.

Le guidage de la rotule 200 est renforcé par deux nervures 124.

Ces nervures 124 sont sensiblement cylindriques de révolution autour d'un axe 126 orthogonal aux axes 210 et 220. Plus précisément, la surface interne des nervures 126 qui repose contre la rotule 200 est complémentaire de la surface sphérique 242.

De plus, une surface plane 250, prévue sur le manchon 208, se raccorde à la rotule 200. En position de repos de la rotule 200 (tel qu'illustré sur la figure 1), la surface 250 est coplanaire de la surface supérieure 122 de la toile 120.

On notera de plus que les extrémités des ailes 404, 406, présentant les portées d'appui 412, 414, sont délimitées par des enveloppes sphériques 405, 407. Celles-ci ont un centre commun qui coïncide avec le centre des portées d'appui 412, 414.

La différence entre les rayons des surfaces sphériques 241 et 242 de la rotule est au moins égale à l'épaisseur des extrémités des ailes 404, 406, c'est-à-dire à la distance radiale, référencée r sur la figure 2, séparant les surfaces sphériques 405, 412 et 407, 414 de la chape 400.

Enfin, on notera que les surfaces sphériques 241, 242, 412, 414, 405, 407 et 114 ont le même centre. Celui-ci correspond de plus à l'intersection des axes 210, 220 et 302.

## Revendications

1. Commutateur électrique, en particulier pour véhicules automobiles, du type comportant un boîtier (100) muni d'une pluralité de contacts électriques et portant un levier de commande (300), dans lequel le levier de commande (300) peut être déplacé à rotation autour de son axe longitudinal (320) pour opérer une première action sur les contacts électriques en vue d'assurer une première fonction, le levier de commande (300) peut être déplacé à pivotement autour d'un axe principal (210) transversal à son axe longitudinal pour opérer une seconde action sur les contacts électriques en vue d'assurer une seconde fonction, et le levier de commande peut être déplacé à pivotement autour d'un axe secondaire transversal à son axe longitudinal et à l'axe principal pour opérer une troisième action sur les contacts électriques en vue d'assurer une troisième fonction, caractérisé par le fait qu'il comprend une rotule (200) portée à pivotement sur le boîtier autour de deux axes transversaux (210, 220) respectivement principal et secondaire, la rotule (200) possédant un canal traversant (240) recevant le levier (300) libre de rotation autour de son axe longitudinal (302) transversal aux axes de pivotement principal (210) et secondaire (220) de la rotule (200), le commutateur comportant en outre une chape (400) portée par la rotule (200) pour suivre celle-ci lors de son pivotement autour de l'axe secondaire (220) tout en autorisant un pivotement relatif de la rotule (200) par rapport à la chape (400) lorsque la rotule (200) est déplacée à pivotement autour de l'axe principal (210).

2. Commutateur électrique selon la revendication 1, caractérisé par le fait que le boîtier est muni d'une palier (110) d'enveloppe sphérique guidant la rotule (200) à pivotement autour de l'axe secondaire (220) et de l'axe principal (210) tandis qu'un organe élastique (234) sollicite la rotule (200) en appui contre le palier (110).

3. Commutateur électrique selon la revendication 2, caractérisé par la fait que l'organe élastique (234) sollicitant la rotule (200) en appui contre le palier sphérique (110) sollicite également un organe (230) servant d'indexation à la chape (400) et à la rotule (200) lors de leur pivotement commun autour de l'axe secondaire (220).

4. Commutateur électrique selon l'une des revendications 1 à 3, caractérisé par le fait que la rotule (200) porte au moins un tourillon (212, 214) coaxial à l'axe principal (210) et la chape (400) est engagée sur le tourillon (212, 214) pour suivre la rotule (200) lors de ses pivotements autour de l'axe secondaire (220) tout en autorisant un pivotement relatif de la rotule (200) par rapport à la chape (400) lorsque la rotule (200) est entraînée à déplacement autour de l'axe principal (210).

5. Commutateur électrique selon la revendication 4, caractérisé par le fait que la rotule (200) porte deux tourillons (212, 214) diamètralement opposés et coaxiaux à l'axe principal (210), sur lesquels est engagée la chape (400).

6. Commutateur électrique selon l'une des revendications 1 à 5, caractérisé par le fait qu'il comprend des moyens élastiques (234) interposés entre la chape (400) et la rotule (200) pour définir une indexation relative de la chape (400) et de la rotule (200) lorsque cette dernière est entraînée à pivotement autour de l'axe principal (210).

7. Commutateur électrique selon l'une des revendications 1 à 6, caractérisé par le fait que le levier (300) est de plus susceptible de translation parallélement à son axe longitudinal (320) pour opérer une quatrième fonction.

8. Commutateur électrique selon l'une des revendications 1 à 7, caractérisé par le fait que la rotation du levier (300) autour de son axe longitudinal (320) assure une sélection du mode éclairage arrêt/ville/route, le pivotement de la rotule (200) autour de l'axe principal (210) assure une inversion des fonctions code/phare et le pivotement de la rotule (200) autour de l'axe secondaire (220) assure une commande des indicateurs de changement de direction.

9. Commutateur électrique selon l'une des revendications 1 à 8, caractérisé par le fait que le levier (300) comporte une partie (304) excentrée par rapport à son axe longitudinal (302), qui coopère avec une fourche (510) solidaire d'un tiroir (500) pour commander celui-ci à translation afin d'assurer la première fonction lorsque le levier (300) est entraîne à rotation autour de son axe longitudinal.

10. Commutateur électrique selon l'une des revendications 1 à 9, caractérisé par le fait que la rotule (200) est munie d'un doigt de commande (206) qui repose élastiquement contre un coulisseau (600) guidé à translation dans le boîtier de telle sorte que le pivotement de la rotule (200) autour de l'axe principal (210) commande la translation du coulisseau (600).

**Claims**

1. An electrical switch, in particular for motor vehicles, of the type comprising a housing (100) provided with a plurality of electrical contacts and having a control lever (300), in which the control lever (300) is capable of being displaced in rotation about its longitudinal axis (302) in order to operate a first action on the electrical contacts in order to perform a first function, the control lever (300) being capable of being displaced by pivoting about a main axis (210) extending transversely to its longitudinal axis in order to operate a second action on the electrical contacts in order to perform a second function, and the control lever being capable of being displaced by pivoting about a secondary axis which is transversal both to its longitudinal axis and to the main axis in order to operate a third action on the electrical contacts in order to perform a third function, the electrical switch being characterized by the fact that it includes a ball (200) mounted to pivot relative to the housing about two transverse axes (210 and 220) corresponding respectively to the main axis and to the secondary axis, the ball (200) having a through channel (240) receiving the lever (300) and leaving it free to rotate about its own longitudinal axis (302) which extends transversely relative to the main pivot axis (210) and to the secondary pivot axis (220) of the ball (200), the switch also including a clevis (400) carried by the ball (200) to follow the ball when it pivots about the secondary axis (220) while allowing the ball (200) to pivot relative to the clevis (400) when the ball is displaced to pivot about the main axis (210).

2. An electrical switch according to claim 1, characterized by the fact that the housing is provided with a bearing (110) having a spherical envelope and guiding the ball (200) to pivot about the Secondary axis (220) and the main axis (210) while a resilient member (234) urges the ball (200) against said bearing (110).

3. An electrical switch according to claim 2, characterized by the fact that the resilient member (234) urging the ball (200) to press against the spherical bearing (110) also presses against a member (230) which provides an indexing function for the clevis (400) and the ball (200) when they pivot together about the secondary axis (220).

4. An electrical switch according to any one of claims 1 to 3, characterized by the fact that the ball (200) has at least one stub axle (212, 214) which is coaxial with the main axis (210), and the clevis (400) is engaged over the stub axle (212, 214) in order to follow the ball (200) when it pivots about the secondary axis (220) while allowing relative pivoting to take place between the ball (200) and the clevis (400) when the ball (200) is rotated about the main axis (210).

5. An electrical switch according to claim 4, characterized by the fact that the ball (200) has two diametrically opposite stub axles (212 and 214) which are coaxial with the main axis (210) and on which the clevis (400) is engaged.

6. An electrical switch according to any one of claims 1 to 5, characterized by the fact that it includes resilient means (234) interposed between the clevis (400) and the ball (200) in order to provide an indexing function between the clevis (400) and the ball (200) when the ball is made to pivot about the main axis (210).

7. An electrical switch according to any one of claims 1 to 6, characterized by the fact that the lever (300) is also capable of translation parallel to its longitudinal axis (302) in order to operate a fourth function.

8. An electrical switch according to any one of claims 1 to 7, characterized by the fact that rotation of the lever (300) about its longitudinal axis (302) serves to select between the following lighting conditions: off; sidelights; and headlights; with pivoting of the ball (200) about the main axis (210) interchanging between main beam and dipped beam; and with pivoting of the ball (200) about the secondary axis (220) controlling the direction indicator lights.

9. An electrical switch according to any one of claims 1 to 8, characterized by the fact that the lever (300) includes a portion (304) which is offset from its longitudinal axis (302) and which co-operates with a fork (510) fixed to a slide (500) for causing the slide to move in translation in order to perform the first function when the lever (300) is rotated about its longitudinal axis.

10. An electrical switch according to any one of claims 1 to 9, characterized by the fact that the ball (200) is provided with a control finger (206) which rests resiliently against a crosshead (600) which is guided to move in translation inside the housing in such a manner that pivoting the ball (200) about the main axis (210) causes the crosshead (600) to move in translation.

**Patentansprüche**

1. Elektrischer Kommutator, insbesondere für Kraftfahrzeuge, der Bauart mit einem Gehäuse (100), das mit mehreren elektrischen Kontakten versehen ist, und einem Steuerhebel (300), der um seine Längsachse (302) verdreht werden kann, um eine erste Operation an den elektrischen Kontakten zum Bewirken einer ersten Funktion auszuüben, wobei der Steuerhebel (300) um eine quer zu seiner Längsachse stehende Hauptachse (210) verschwenkt werden kann, um eine Zweite Operation an den elektrischen Kontakten zum Bewirken einer zweiten Funktion auszuüben, und wobei der Steuerhebel um eine Sekundärachse, welche quer zu seiner Längsachse und der Hauptachse verläuft, verschwenkt werden kann, um eine dritte Operation an den elektrischen Kontakten zum Bewirken einer dritten Funktion auszuüben, **dadurch gekennzeichnet,** daß er eine um die beiden quer verlaufenden Achsen (210,220), nämlich die Hauptachse und die Sekundärachse, schwenkbare Gelenkkugel (200) aufweist, welche von einem den Hebel (300) zu einer Drehung um seine Längsachse (302), die quer zur Hauptachse (210) und zur Sekundärachse (220) der Gelenkkugel (200) verläuft, befähigenden Kanal (240) durchsetzt ist, und ferner einen von der Gelenkkugel (200) getragenen Gabelbügel (400) aufweist, welcher der Gelenkkugel bei ihrer Schwenkung um die Sekundärachse (220) folgt, wobei eine relative Schwenkung der Gelenkkugel (200) bezüglich des Gabelbügels (400) ermöglicht ist, wenn die Gelenkkugel (200) zu einer Schwenkung um die Hauptachse (210) verlagert wird.

2. Elektrischer Kommutator nach Anspruch 1, **dadurch gekennzeichnet,** daß das Gehäuse mit einer sphärischen Lagerschale (110) ausgerüstet ist, welche die Gelenkkugel (200) zu einer Schwenkung um die Sekundärachse (220) und die Hauptachse (210) führt, während ein elastisches Organ (234) die Gelenkkugel (200) in Anlage an die Lagerschale (110) drückt.

3. Elektrischer Kommutator nach Anspruch 2, **dadurch gekennzeichnet,** daß das elastische Organ (234), welches die Gelenkkugel (200) in Anlage an die Lagerschale (110) drückt, gleichzeitig ein Indexierorgan (230) zum Indexieren der Gelenkgabel (400) und der Gelenkkugel (200) bei deren Schwenken um die Sekundärachse (220) beaufschlagt.

4. Elektrische Kommutator nach einem der Ansprüche 1 bis 3, **dadurch gekennzeichnet,** daß die Gelenkkugel (200) mindestens einen Lagerzapfen (212, 214) aufweist, der koaxial mit der Hauptachse (210) ist, und daß der Gabelbügel (400) mit dem Lagerzapfen (212, 214) zusammenwirkt, um der Gelenkkugel (200) beim gemeinsamen Schwenken um die Sekundärachse (220) zu folgen und dabei eine relative Schwenkung der Gelenkkugel (200) bezüglich des Gabelbügels (400) zuzulassen, wenn die Gelenkkugel (200) zu einer Verlagerung um die Hauptachse (210) veranlaßt wird.

5. Elektrischer Kommutator nach Anspruch 4, **dadurch gekennzeichnet,** daß die Gelenkkugel (200) zwei Zapfen (212, 214) trägt, die koaxial mit der Hauptachse (210) diametral gegenüberliegend angeordnet sind und auf denen der Gabelbügel (400) angeordnet ist.

6. Elektrischer Kommutator nach einem der Ansprüche 1 bis 5, **dadurch gekennzeichnet**, daß er elastische Mittel (234) aufweist, die zwischen dem Gabelbügel (400) und der Gelenkkugel (200) angeordnet sind, um eine Indexierung relativ zum Gabelbügel (400) und zur Gelenkkugel (200) zu schaffen, wenn die letztere zu einer Schwenkung um die Hauptachse (210) veranlaßt wird.

7. Elektrischer Kommutator nach einem der Ansprüche 1 bis 6, **dadurch gekennzeichnet**, daß der Hebel (300) außerdem zu einer Translationsbewegung parallel zu seiner Längsachse (302) antreibbar ist, um eine vierte Funktion zu bewirken.

8. Elektrischer Kommutator nach einem der Ansprüche 1 bis 7, **dadurch gekennzeichnet**, daß die Drehung des Hebels (300) um seine Längsachse (302) eine Auswahl der Betriebsarten Standlicht/Abblendlicht/Fernlicht gewährleistet, daß die Schwenkung der Gelenkkugel (200) um die Hauptachse (210) eine Umschaltung der Funktionen Abblendlicht/Fernlicht gewährleistet und daß die Schwenkung der Gelenkkugel (200) um die Sekundärachse (220) einen Steuerbefehl für die Fahrrichtungsanzeiger gewährleistet.

9. Elektrischer Kommutator nach einem der Ansprüche 1 bis 8, **dadurch gekennzeichnet**, daß der Hebel (300) eine bezüglich seiner Längsachse (302) exzentrische Partie (304) aufweist, welche mit einer an einem Schieber (500) befestigten Gabel (510) zusammenwirkt, um diesen zu einer Translationsbewegung zum Ausführen der ersten Funktion anzutreiben, wenn der Hebel (300) zu einer Drehung um seine Längsachse angetrieben wird.

10. Elektrischer Kommutator nach einem der Ansprüche 1 bis 9, **dadurch gekennzeichnet**, daß die Gelenkkugel (200) mit einem Steuerfinger (206) versehen ist, der elastisch an einer zu einer Translationsbewegung im Gehäuse geführten Kulisse (600) anliegt, derart, daß eine Schwenkung der Gelenkkugel (200) um die Hauptachse (210) eine Translationsbewegung der Kulisse (600) erzeugt.

FIG_1

EP 0 273 805 B1

FIG. 2

FIG_1A

106
220
100
124
112
122
114
126
210
120

FIG_3

205
244
241
212
200
240
210
220
$\ell$
206
208
207
246
202
214
204

FIG_4

200
220
242
236
208
206
248
244
214
210
250
240
241
204
202

FIG.5

FIG.6